# EUROPEAN PATENT SPECIFICATION

(11) **EP 2 518 842 B1**
(45) Date of publication and mention of the grant of the patent: **07.09.2016**
(21) Application number: 11164190.8
(22) Date of filing: 28.04.2011
(51) Int. Cl.: H02B 11/24

(54) **Shutter device**
Blendenvorrichtung
Dispositif obturateur

(43) Date of publication of application: 31.10.2012
(73) Proprietor: ABB Schweiz AG, 5400 Baden (CH)
(72) Inventor: Zhang, Yang, 24044, Dalmine (BG) (IT)
(74) Representative: De Santis, Giovanni

(56) References cited:
- GB-A- 513 494
- US-A- 3 002 129
- US-A- 3 614 350
- US-A- 4 086 452

## Description

The present disclosure relates to a shutter device for a switchgear apparatus. In particular, the shutter device is suitable for being connected to a switchgear apparatus having a circuit breaker unit of the draw-out type which is housed in a switchgear casing. The shutter device is particularly suitable to be used in the Medium Voltage field, where, for the purposes of the present application, the term Medium Voltage refers to applications in the range from 1 KV up to some tens of kV.

Known shutter devices comprise a shutter panel or plate which is movable from a non-protective raised position to a protective lowered position. The switchgear comprises a circuit breaker unit which is supported by a trolley which slides along stationary horizontal rails. The trolley, which is coupled to a worm-screw driven by a handle, can be moved from an extraction position with respect to the switchgear casing, in which movable electric contacts fixed to the breaker unit are disengaged from stationary contacts included in the switchgear, to an insertion position inside the switchgear casing, in which the movable electric contacts engage with the respective stationary electric contacts.

The shutter panel is moved by a lever mechanism comprising two levers which are driven by the movement of the breaker unit. The two levers are arranged parallel to one other and at opposite lateral sides with respect to the breaker unit. A first end of each lever is directly and pivotally connected to the respective vertical edge of the shutter panel and a second end of each lever is pivotally connected to a stationary hinging-pin provided on the switchgear casing.

In the non-protective raised position, suitable passage openings provided on the shutter panel are positioned so as to enable the movable electric contacts to pass there through so as to couple with the respective stationary electric contacts. When the breaker unit is withdrawn in the extraction position, the shutter panel is displaced in the protective lowered position, so that closed zones thereof cover the stationary electric contacts thus preventing access to the latter.

Opposite vertical edges of the shutter panel are housed in respective stationary guide elements which are fixed to a casing of the switchgear. The two vertical edges of the shutter panel are directly in contact with, and vertically slide into the respective guide elements.

A drawback of the known shutter device is that the shutter panel is likely to jam along the vertical parallel guide elements if the shutter panel is not perfectly orientated in a set lying plane, which is in this case a vertical plane. In other words, problems in the driving may occur if the shutter panel accidentally arranges itself transversely with respect to the guide elements or if even a minimal misalignment occurs between the shutter panel and the guide elements. As a result, the opening/closing operations may be jeopardized thus affecting the safety of operating or maintenance personnel.

Furthermore, mechanical reliability problems often occur in the hinging connections of the levers to the switchgear casing for the following reasons. On each lever a hinging-hole is provided which receives the respective hinging-pin around which rotation of the lever is enabled. As the width of each hinging-hole depends on the transverse dimensions of the corresponding lever, i.e. is necessarily reduced with respect to the height of the latter, consequently the thickness of the respective hinging-pin is also limited and results rather small. This may imply a not very satisfying mechanical strength of the hinging-pins which, with the passing of time, may give way, thus undesirably jeopardizing functionality of the switchgear.

Each lever has an external lower side surface defining a cam profile and intended to rest on a respective fulcrum arranged below which is fixed to a lateral wall of the breaker unit device. Each lever has a cross-section which varies along a longitudinal extent of the lever so as to properly define the above mentioned cam profile. The levers may be configured as compact rods having portions with different thickness, or as tubular bar sections having different cross-section values along the longitudinal extent of the lever.

The cam profile, subject to the action received from the respective fulcrum being in movement integrally with the breaker unit, causes the lever to pivot around the respective stationary hinge, thus raising or lowering the shutter panel respectively in the non-protective or protective position.

The known shutter device above discussed is not sufficiently reliable and safe for the following reasons. In the known shutter device, a force of unilateral type occurs between each lever and the respective fulcrum. In other words, each lever is only prevented from freely rotating downwards by the respective fulcrum but it is not prevented from rotating upwards by the latter. This means that a rash operator could have the possibility to manually raise the levers and thus the shutter panel even if the breaker unit is in the extraction position, thus dangerously accessing to the stationary electric contacts.

Furthermore, if the shutter panel gets jammed or blocked in the non protective raised position, for example due to a poor lubrication of the two guide elements or to dust seeping in the latter, the two levers are not able to follow the respective fulcrums during extraction movement of the breaker unit. In other words, the fulcrums get detached from the levers and mutual contact thereof is no longer ensured. Without such a mutual contact, control of the movement of the levers is lost thus resulting in an unreliable driving of the shutter panel.

A further drawback of known shutter devices is that they can be easily tampered, i.e. an operator is able to autonomously raise or lower the shutter panel without impediments.

Patent US 3,614,350 discloses a switchgear unit provided with a shutter mechanism according to the preamble of claim 1.

Patent US 3,002,129 discloses a switchboard structure housing a movable truck bearing an electric switch. A shutter mechanism is provided in order to shield stationary contacts when the truck is withdrawn from the connected position. The shutter is locked into a closed position by the mechanical interaction of a roller riding along the truck in a cam follower element or in a slot of a cam surface element.

Hence, there is a desire and room for further improvements of known shutter devices; such a desire is fulfilled by a shutter device for a switchgear apparatus according to the present disclosure, which comprises:
- a panel element movable between a protective position, in which said panel element prevents access to stationary electric contacts of said switchgear apparatus, and a non-protective position, in which said panel element enables electric contacts of a circuit-breaker of said switchgear apparatus to couple with said stationary electric contacts;
- driving lever means for driving said panel element upon a movement of said circuit-breaker from an extracted-non-operative position to an inserted-operative-position with respect to said switchgear apparatus, said driving lever means being movable by driving-pin-elements fixed to said circuit breaker; and
- an interlocking assembly configured for locking said driving lever means and blocking said panel element in said protective position so as to prevent manually or unexpectedly moving of said panel element when said circuit-breaker is in said extracted-non-operative position; characterized in that said interlocking assembly comprises:
   - main-support means fixable to a casing of said switchgear apparatus;
   - core-plate means to which said driving lever means are fixed, wherein said core-plate means are provided with hinge-pin means through which said driving lever means are pivotally connected to said casing, said hinge-pin means being pivotally coupled with said main-support-means fixable to said casing, and wherein said core-plate means extends radially with respect to and is rotatable around an axis which is perpendicular to said driving lever means and parallel to said panel element;
   - fail-safe-actuator means pivotally movable between a locking position in which it acts on said core-plate means for locking said driving lever means thus blocking said panel element in said protective position, and a releasing position in which said fail-safe-actuator means disengage from said core-plate-means thus enabling movement of said driving lever means, said fail-safe-actuator means being pivotally connected to said main-support-means through pivot means.

The present disclosure encompasses also a switchgear apparatus comprising a shutter device as defined in the appended claims and described in the following.

Detailed characteristics and advantages will become apparent from the description of some preferred but not exclusive embodiments of a shutter device according to the present disclosure, illustrated only by way of non-limitative examples with the accompanying drawings, wherein:
Figure 1 is a perspective view of part of switchgear apparatus comprising the shutter device according to an exemplary embodiment of the present disclosure, in a protective configuration, i.e. with a circuit breaker in an extraction position, corresponding to a non-operative position thereof;
Figure 2 is a further perspective view of the switchgear of Figure 1 but in a non-protective configuration, i.e. with a circuit breaker in an insertion position, corresponding to a service or operative position thereof;
Figure 3 is a perspective view of the shutter device of the present disclosure in a protective configuration, corresponding to the non-operative position of the circuit breaker in the extraction position;
Figure 4 is a perspective view of the shutter device in the non-protective configuration, corresponding to the operative position of the circuit breaker in the insertion position;
Figure 5 is a side view of the shutter device in the raised protective configuration at which an extraction position of the circuit breaker corresponds, of which only a driving pin element is shown;
Figure 6 is an enlarged side view of part of an interlocking assembly of the shutter device in Figure 5;
Figure 7 is a further side view of the shutter device with the driving pin element of the circuit breaker in a intermediate position;
Figure 8 is an enlarged side view of the part of interlocking assembly of the shutter device in Figure 7;
Figure 9 is a still further side view of the shutter device in a lowered position with the driving pin element of the circuit breaker in a further intermediate position;
Figure 10 is an enlarged side view of the part of interlocking assembly in Figure 9;
Figure 11 shows the shutter device in the lowered non-protective configuration which corresponds to the circuit breaker in the insertion position.

It should be noted that in the detailed description that follows, identical or similar components have the same reference numerals, regardless of whether they are shown in different embodiments of the present disclosure; it should also be noted that in order to clearly and concisely disclose the present disclosure, the drawings may not necessarily be to scale and certain features of the disclosure may be shown in somewhat schematic form.

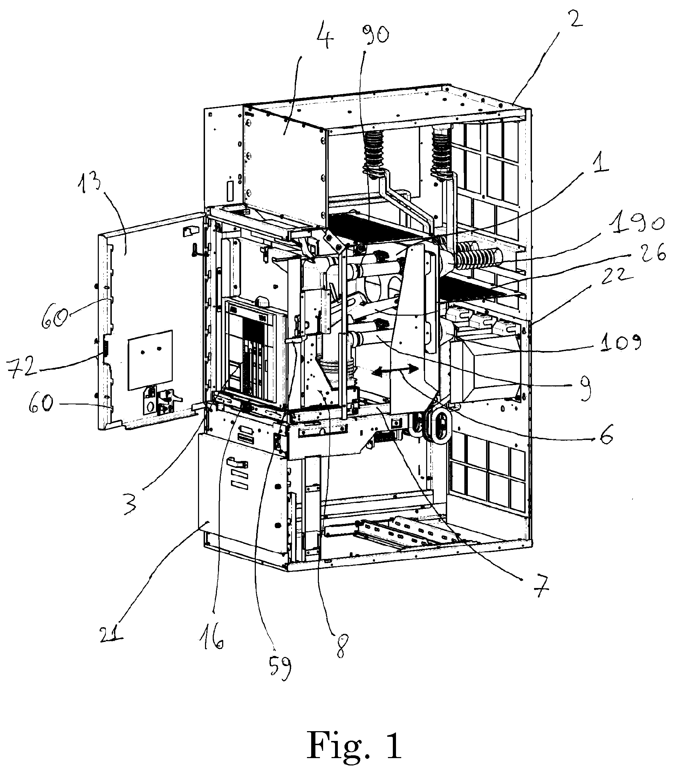

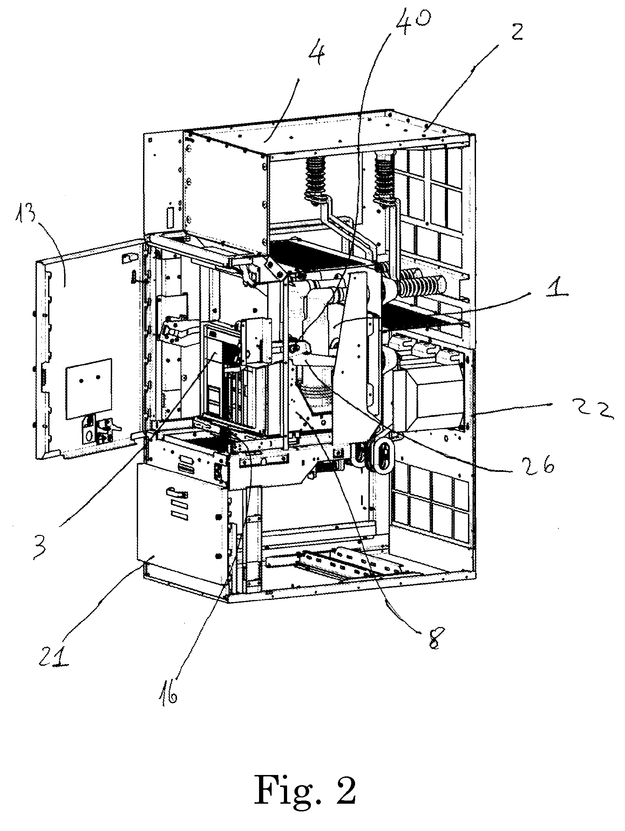

With reference to the attached Figures, an exemplary embodiment of a shutter device 1 is shown which is suitable for being connected to a switchgear apparatus 2 having a circuit breaker unit 3 of the draw-out type which is housed in a switchgear casing 4 (shown in Figures 1 and 2). The switchgear casing or cabinet 4 comprises a front portion 21, accessible to an operator, and a rear portion 22. A front door 13 is provided for closing and opening the switchgear casing 4 thus preventing or enabling access to the circuit breaker 3. The front door 13 is provided, at edge zones thereof, with hooking protrusions 60 pointing downwards, which, when the front door 13 is in the closed position, are received in respective openings provided in vertical uprights of the switchgear casing 4. When opening of the front door 13 is required, the front door 13 has first to be lifted in such a way that the hooking protrusions 60 disengage from the respective openings. Only once the hooking protrusions 60 are disengaged from the respective openings it is possible to rotate the front door 13 thus enabling access to an internal zone of the switchgear casing 4.

The circuit breaker unit 3 is supported by a trolley 8 which is slidable in a direction 6 towards and away from the rear portion 22. The trolley 8 slides along two rail bars 7, which are fixed to the switchgear casing 4.

On the circuit breaker unit 3 there are provided lower electrical contacts 9, and upper electrical contacts 90, arranged for cooperating with stationary lower electrical contacts 109 and stationary upper electrical contacts 190 respectively, which are positioned within the switchgear casing 4.

The lower electrical contacts 9 and the upper electrical contacts 90 extend parallel to the direction 6 and protrude from a rear side of the circuit breaker unit 3 towards the rear portion 22 of the switchgear apparatus 2.

The circuit breaker unit 3, through the trolley 8, is movable from an extraction position, shown in Figure 1, in which the electric contacts 9 and 90 - which are movable with the circuit breaker unit 3 - are disengaged from the respective stationary electric contacts 109 and 190, to an insertion position, shown in Figure 2, in which the movable electric contacts 9 and 90 are coupled with the respective stationary electric contacts 109 and 190.

The trolley 8 is coupled to a worm-screw which is driven by a handle connectable to a worm-screw end 16 when the front door 13 is in closed position. By rotating the worm-screw through the handle, the trolley 8 can be moved from the insertion position to the extraction position, with respect to the switchgear casing 4.

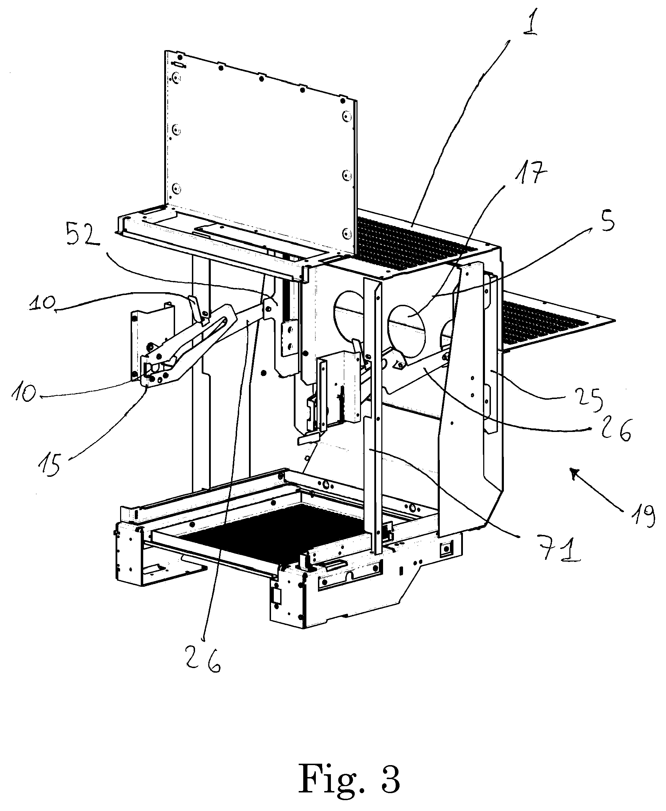

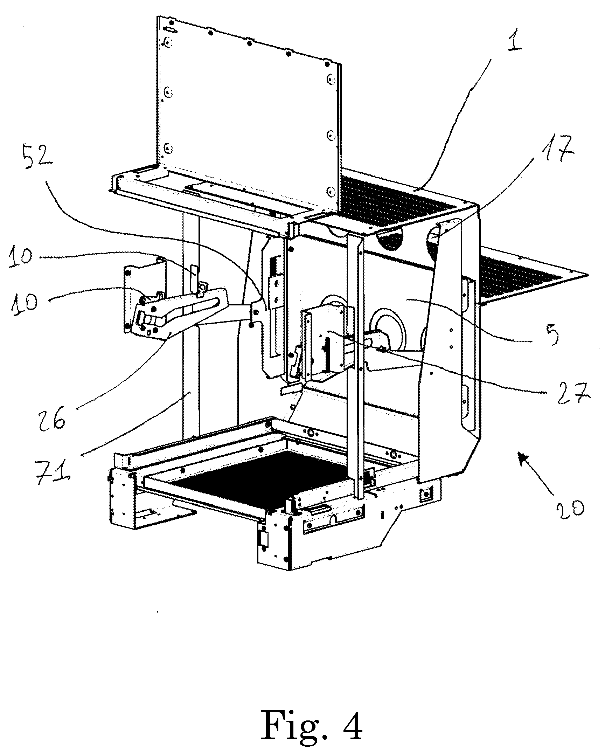

The shutter device 1 comprises a panel element or shutter panel 5 which is movable from a raised protective position 19, shown in Figures 1, 3, 5, 7, to a lowered non-protective position 20, shown in Figures 2, 4, 11, along a straight path, in particular a vertical straight path.

In the raised protective position 19 the shutter panel 5 prevents access to the stationary electric contacts 109 and 190, whereas in the lowered non-protective position 20 the shutter panel 5 enables the electric contacts 9 and 90 of the circuit breaker 3 to couple with the stationary electric contacts 109 and 190 respectively. When the circuit breaker 3 is positioned in the non-operative extraction position the shutter panel 5 is in the raised protective position 19, whereas when the shutter panel 5 is in the lowered non- protective position 20 the circuit breaker 3 can be arranged in the operative insertion position.

The shutter panel 5 is configured to maintain the same orientation in both the lowered position 20 and the raised position 19. In other words, the shutter panel 5 is arranged parallel to the path and keeps its orientation constant while moving along the straight path.

The shutter panel 5, in the raised protective position 19 covers the stationary electric contacts 109 and 190 when the movable electric contacts 9 and 90 are separated there from. On the contrary, the shutter panel 5, while being in the lowered non-protective position 20, leaves the stationary electric contacts 109 and 190 uncovered which can be thus in contact with the movable electric contacts 9 and 90.

The shutter panel 5 can be made of a light and/or fireproof and electric insulator material with a high mechanical strength; for example, the shutter panel 5 is made of a suitable plastics material, such as "polyamide".

On the shutter panel 5 there are defined three different zones which extend longitudinally and parallel to one other, i.e. an upper covering zone, a middle passage zone, and a lower covering zone.

The upper covering zone and the lower covering zone, when the shutter panel 5 is in the raised protective position 19, are positioned in front of respectively the upper stationary electric contacts 190 and the lower stationary electric contacts 109 so as to prevent access thereto.

On the middle passage zone, some passage openings 17, for instance in the exemplary embodiment three passage openings, are provided which enable the lower movable electric contacts 9 to pass through the shutter panel 5 in the insertion position in order to couple with the lower stationary electric contacts 109. When the shutter panel 5 is in the lowered non-protective position the upper stationary electric contacts 190 are uncovered and can be reached by the upper movable electric contacts 90. In such a configuration, the upper movable electric contacts 90 are at a height higher than the shutter panel 5 and can go beyond a top edge of the latter thus coupling with the upper stationary electric contacts 190.

Folded portions 25 protrude transversely, e.g. orthogonally from side edges of the shutter panel 5, which serve for connecting the shutter panel 5 to a lever mechanism 15 which is driven by the movement of the circuit breaker unit 3 from the extraction position to the insertion position and vice versa as it will be discussed in the following. The lever mechanism 15 thus automatically drives the shutter panel 5 from the raised protective position 19 to the lowered non-protective position 20 and vice versa according to the position of the circuit breaker 3.

The lever mechanism 15 comprises a pair of driving levers 26 which are arranged parallel to each other and are pivotally connected at opposite sides of the shutter panel 5.

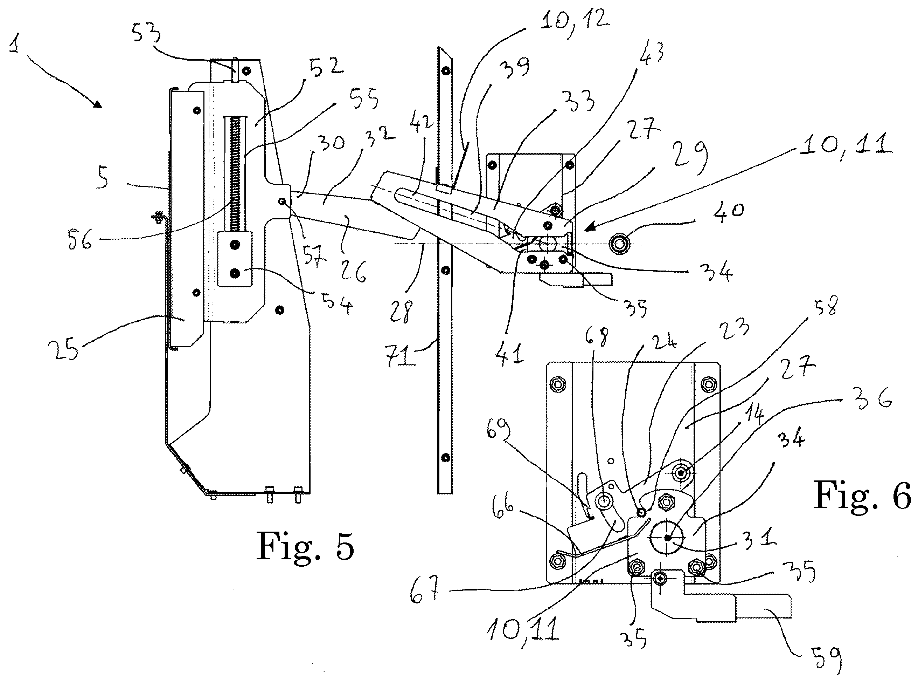

The driving levers 26, as better shown in Figure 5, 7, 9, 11, comprise respective panel-connecting-ends 30 which are pivotally connected, through pivot pins 57, to respective slider elements 52 each fixed to a respective vertical side edge of the shutter panel 5.

Each slider element 52 is slidably coupled to a vertical guide rod 53 which is, in a stationary position, fixed to the switchgear casing 4. The slider element 52 can only slide vertically along the guide rod 53. In each slider element 52 there is provided a vertical guiding slot 55 which is configured for interacting with a guide block 54 which is fixed to the guide rod 53 and to the switchgear casing 4. The guide block 54 is received in the guiding slot 55 and acts as a guide element for the slider element 52. The guide block 54 may be made of a friction reducing material, such as nylon, thus acting as a friction reducing element as well.

Each slider element 52 is provided with a return spring 56 which is housed within the guiding slot 55 and acts for pushing the slider element 52 to the raised protective position 19, better shown in Figure 5. A bottom end of the return spring 56 is stationary and abuts against a top surface of the respective guide block 54 which is stationary, whereas a movable top end of the return spring 56 abuts against a top delimiting edge of the guiding slot 55 which moves vertically.

When the circuit breaker 3 is in the non-operative extraction position, the shutter panel 5 is kept in the raised protective position 19 by the action of the return spring 56.

In the exemplary embodiment illustrated, the return spring 56 comprises a compression helical spring. However, other different types of springs or returning elastic elements can also be provided instead of the compression helical spring 56.

Owing to the slider elements 52, which provide an effective and smooth guiding action for the shutter panel 5, a substantially horizontal movement of the circuit breaker 3 results in a substantially vertical movement of the shutter panel 5 which is carried out with high precision and with no risk of jamming or getting stuck of the shutter panel 5 as it may occur in prior art devices.

As a result, high levels of safety and reliability are ensured during opening/closing operations of the shutter panel 5.

Each driving lever 26 comprises a first lever portion 32, which is nearer to the shutter panel 5, and a second lever portion 33, which is farther from the shutter panel 5. The first lever portion 32 and the second lever portion 33 are mutually fixed so that each driving lever 26 results as a one-piece or monolithic element. This implies a structural simplification and thus an improved reliability.

The first lever portion 32 and the second lever portion 33 are fixed to one other through a right angle portion and lie in respective planes which are mutually parallel and spaced by a suitable offset-distance which can be chosen according to the width of the shutter panel and the geometry of the circuit breaker unit 3.

The second lever portion 33 comprises a hinge end 29 through which it is pivotally connected to the switchgear casing 4; the hinge end 29 is pivotally connected to a main support element 27 which is fixed to the switchgear casing 4. The hinge end 29 is fixed by fixing screws 35 to a rotating core-plate 34 which is provided with a protruding hinge pin 31 pivotally engaging with a hinge-opening provided in the main support element 27. The rotating core-plate 34 and the main support element 27 are part of an interlocking assembly 10 included in the switchgear device 1, which will be described in detail later on.

The core-plate 34 is rotatable around a rotation axis 36 better visible in Figures 6, 8, and 10, which is parallel to the shutter panel 5 and perpendicular to the driving levers 26.

The rotating core-plate 34, owing to his geometry and thickness, is structurally highly resistant. The rotating core-plate 34 extends radially with respect to the rotation axis 36 with such an area that enables the presence of a very thick hinge pin 31. This configuration, advantageously, provides a highly reliable and mechanically resistant pivotal connection of the driving levers 26 to the switchgear casing 4, in particular via the main support elements 27.

Each driving lever 26 is provided with a cam profiled slot 39, in particular provided on the second lever portion 33, which is configured for cooperating with a respective driving pin element 40 (shown in Figures 2, 5, 7, 9, and 11) fixed to the circuit breaker unit 3. The pin elements 40, movable together with the circuit breaker 3, interact with the cam profiled slots 39 so as to move the driving levers 26, and thus the shutter panel 5.

The two driving pin elements 40 protrude transversely, e.g. orthogonally from respective side walls of the circuit breaker unit 3. Each driving pin element 40 has a diameter which is equal to or less than a transverse wideness of the cam profiled slot 39, in order to be able to run along the latter.

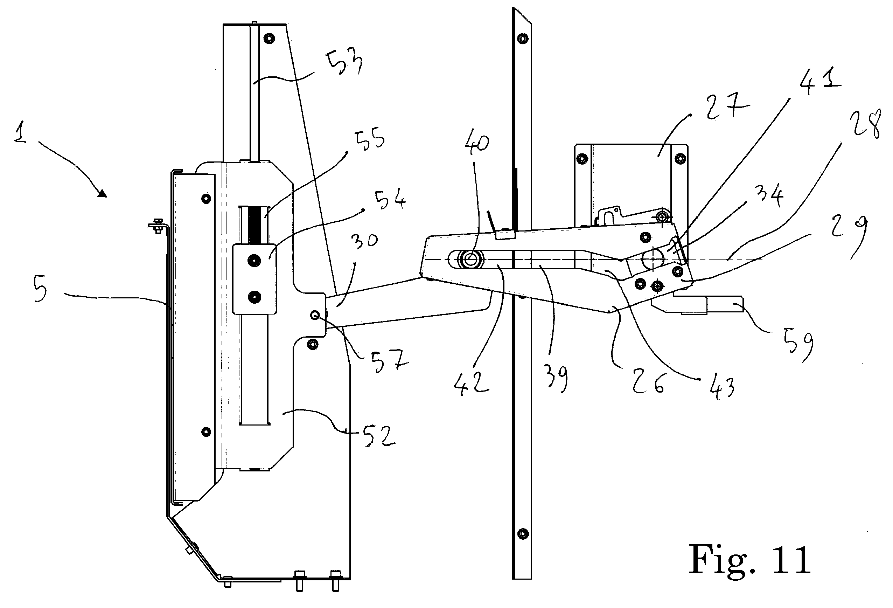

The cam profiled slot 39 comprises, near the hinge end 29, a first slot portion 41, which is arranged substantially horizontal when the shutter panel 5 is in the raised protective position 19, as shown in Figure 5. On the contrary, the first slot portion 41 is sloping from the hinge end 29 downwards when the shutter panel 5 is in the lowered non-protective position 20, as can be seen in Figure 11. In other words, in such a position, the first slot portion 41 results tilted with respect to a reference horizontal line 28, as visible in Figure 11.

The cam profiled slot 39 comprises a second slot portion 42 which is nearer to the panel connecting end 30 than the first slot portion 41.

The second slot portion 42 has a length which is greater than the length of the first slot portion 41. The second slot portion 42 is angularly inclined with respect to the first slot portion 41 as visible in Figures 5, 7, 9, 11. When the shutter panel 5 is in the raised protective position 19 of Figure 5, the second slot portion 42 is tilted upwards along a direction pointing to the shutter panel 5. On the contrary, when the shutter panel 5 is in the lowered non-protective position 20 of Figure 11, the second slot portion 42 is substantially horizontally arranged. The cam profiled slot 39 comprises a third slot portion 43 connecting the first slot portion 41 and the second slot portion 42 and being tilted with respect to the first slot portion 41 and to the second slot portion 42.

The driving pin elements 40, moving integrally with the circuit breaker unit 3, run into the respective cam profiled slots 39 and force the driving levers 26 to follow them, thus causing a rotation of the driving levers 26 around the rotation axis 36. This consequently causes movement of the shutter panel 5 to the raised protective position 19 or to the lowered non-protective position 20.

Engagement of the driving pin elements 40 with the cam profiled slots 39 provides a more precise and effective movement of the driving levers 26. In particular, the angular position of the driving levers 26 is firmly determined by the position of the driving pin elements 40 and when the latter are motionless, no rotation of the driving levers 26 in clockwise or counter-clockwise direction is allowed and thus no movement of the shutter panel 5 is enabled, differently from the prior art shutter devices.

In the shutter device 1 according to the present disclosure, a bilateral constraint is defined between the cam profiled slot 39 and the driving pin elements 40 which prevents any undesired rotation of the driving levers.

The cam profiled slot 39 is shaped for abutting the pin elements 40 from opposite sides thus preventing disengagement of the driving levers 26 from the pin elements 40 during functioning of the shutter device 1. In this way, accidental disengaging of the driving levers 26 from the driving pin elements 40 is prevented.

The shutter panel 5 is forced by the bilateral constraint to follow the driving pin elements 40 both when the circuit breaker unit 3 moves to the insertion position and when it moves to the extraction position. This configuration helps to prevent any accidental jamming of the driving levers 26.

The interlocking assembly 10 comprises an interlocking group 11 for each driving lever 26. In an alternative embodiment (not shown) a single interlocking group 11 associated to only one of the two driving levers 26 can be provided.

In the exemplary embodiment illustrated, the interlocking group 11 is configured for locking the driving levers 26 and blocking the shutter panel 5 in the raised protective position 10. The interlocking assembly 10 prevents manually or unexpectedly moving of the shutter panel 5 when the circuit-breaker unit 3 is in the extraction position.

The interlocking group 11, which also includes the rotating core plate 34 and the main support element 27 above described, is arranged in the proximity of the hinge end 29 of the respective driving lever 26. The interlocking group 11 comprises a fail-safe actuator 23 which is configured for cooperating with the rotating core plate 34 and with the respective driving pin element 40.

The fail-safe actuator 23 comprises a plate portion lying in a plane which is substantially orthogonal to the rotation axis 36. A cam band portion 66, protruding transversely from a lower edge of the plate portion 23, is configured for interacting with the driving pin element 40, as will be better described later on. From the plate portion of the fail-safe actuator 23 a stopper element 24 protrudes substantially parallel to the rotation axis 36.

The stopper element 24 is configured for engaging with a seat portion 58 provided in an edge zone of the rotating core plate 34.

The fail-safe actuator 23 is pivotally connected to the main support element 27 and is rotatable around a pivot 14. In particular, the fail-safe actuator 23 is able to rotate around an axis which is parallel to the rotation axis 36.

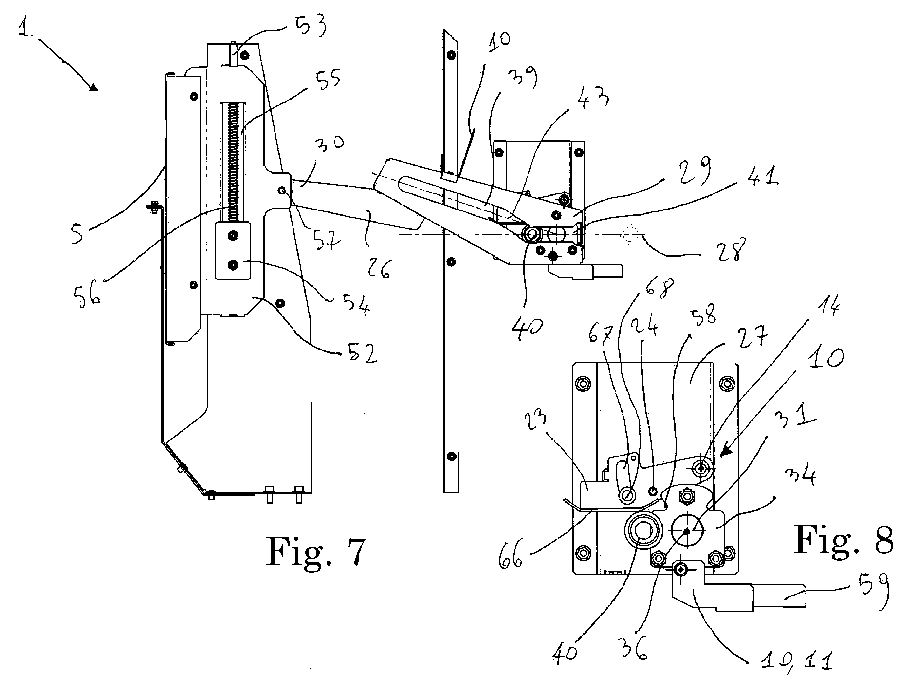

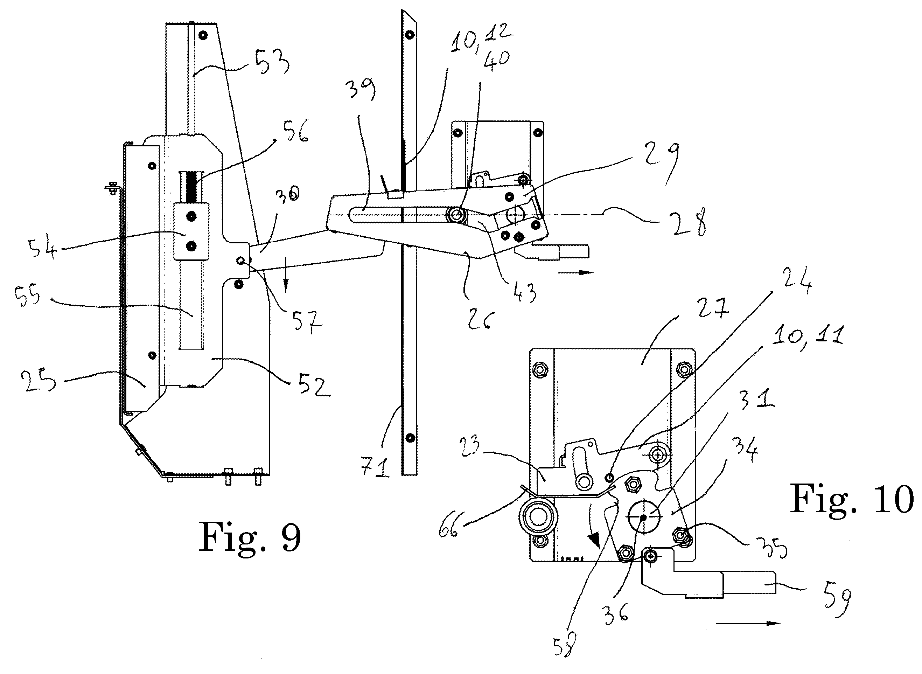

The fail-safe actuator 23 is movable from a locking position, shown in Figure 6, in which the fail-safe actuator 23 is rotated at a lower height, to a releasing position, shown in Figures 8 and 10, in which the fail-safe actuator 23 is rotated at a higher height. In the locking position, the stopper element 24 is engaged with the seat portion 58 so that rotation of the core plate 34 is impossible.

In particular, with reference to Figure 6, a counter-clockwise rotation of the core plate 34 is not possible and therefore a manual or unexpected movement of the shutter panel towards the lowered non-protective position 20 is not allowed. In this configuration the driving levers 26 are held sturdily and only when the circuit breaker 3 is put into the switchgear casing 4, the fail-safe actuator 23 and the core plate 34 can be unlocked thus enabling movement of the shutter panel 5.

In the releasing position the stopper element 24 is disengaged from the seat portion 58 and rotation of the core plate 34 is enabled.

The rotation of the fail-safe actuator 23 is limited from the locking position to the releasing position owing to a stroke-delimiting-slot 67 cooperating with a stationary stop-pin 68.

The fail-safe actuator 23 is elastically biased to the locking position by a suitable tension spring 69 which is housed within the main support element 27. Owing to the tension spring 69, the fail-safe actuator 23 automatically engages with the core plate 34 and locks the shutter panel 5 as soon as the withdrawable circuit breaker 3 is near the extraction position.

The interlocking group 11 may comprise an interlocking lever 59 which is configured for locking the front door 13 in the closed position when the circuit breaker 3 is in the operative insertion position.

When a pair of interlocking groups 11 is provided at respective sides of the switchgear casing 4, i.e. one interlocking group 11 for each driving lever 26, a single interlocking lever 59 associated to only one of the interlocking groups 11 can be provided. In an alternative embodiment, an interlocking lever 59 for each of the two interlocking groups 11 can be provided.

The interlocking lever 59 is connected to the rotating core plate 34 and, according to the rotation of the latter, arranges itself in a protruding position towards the outside of the switchgear casing 4, as shown in Figure 10, or in a withdrawn position, inside the switchgear casing 4 as shown in Figure 6.

The interlocking lever 59 is in the protruding position when the shutter panel 5 is in the lowered non-protective position, i.e. the circuit breaker 3 is in the operative or service insertion position. In the protruding position, the interlocking lever 59 is engaged with a corresponding blocking opening 72 which is suitably provided in the front door 13. The interlocking lever 59 being engaged with the blocking opening 72 prevents the front door 13 from being lifted by an operator and thus opening of the front door 13 is impossible in this configuration, i.e. with the circuit breaker 3 in the operative insertion position.

The interlocking lever 59 acts for keeping the front door 13 locked while the shutter panel 5 is moved to the lowered non protective position 20 upon the insertion movement of the circuit breaker 3. This prevents the potential risk for the operator to open the front door 13 while the circuit breaker 3 is being moved to the operative position thus dangerously accessing to the stationary electrical contacts 90 and 190.

Opening of the front door 13 is only possible once the circuit breaker 3 has been moved to the extraction position, through the suitable handle connected to the worm-screw end 16.

The interlocking group/s 11 is/are concealed under the driving levers 26 thus reducing chances of accidental damages.

The switching device 1 may include a pair of additional protection band screens 71 which are stationary fixed to the switchgear casing 4 so as to cover the lateral gaps between the latter and the circuit breaker 3. The protection band screens 71, which extend for example vertically, help to prevent access to the electrical contacts 9 and 90, thus further increasing safety of the switching apparatus 2.

The interlocking assembly 10 furthermore comprises a padlock element 12 which can be provided on one or both of the driving levers 26, and which acts for further locking the driving levers 26. With reference to Figure 5, the padlock element 12 is fixed to the driving lever 26, in particular protrudes upwards from the second lever portion 33. The padlock element 12 is configured for being firmly coupled with a stationary portion (not shown) of the switchgear casing 4 when the shutter panel 5 is in the raised protective position 19. In particular, when the shutter panel 5 is in the raised protective position 19, a suitable opening provided in the padlock element 12 matches a further opening provided in the above stationary portion and insertion of a padlock or other suitable devices is possible which blocks the driving levers 26. Therefore, when the circuit breaker 3 is in the extraction position, the shutter panel 5, owing to the action of the padlock element 12 is furthermore secured to the raised protective position 19. Therefore the padlock element 12 exerts a further locking action in addition to the locking action already provided by the interlocking group 11. The padlock element 12 can be used when additional safety is necessary.

In this way, a manually or unexpectedly movement of the shutter panel 5 is substantially impossible.

Many of the components of the above described shutter device 1 are obtained from standard materials like hot-dip zinc metal sheet having thickness of 2 mm, which implies reduced production costs.

Furthermore, the above described shutter device 1 is made of a very low number of distinct mechanical parts and this implies a rather simplified structure with respect to the prior art devices.

In the following, functioning of the shutter device 1 is described starting from a configuration, better visible in Figure 5, in which the circuit breaker 3 is in the non- operative extraction position and the shutter panel 5 is in the raised protective position 19. In this configuration, the driving pin elements 40 are separated from the driving levers 26, and the shutter panel 5 is kept lifted by the compression return springs 56. The shutter panel 5 is locked in this position by the fail-safe actuator 23. In particular, as visible in Figure 6, the stopper elements 24 coupled with the seat portions 58 prevent any movement of the driving levers 26.

When insertion of the circuit breaker 3 in the operative position is required, first the padlock elements 12, if any, have to be unlocked, and the front door 13 has to be put in the closed position; then the trolley supporting the circuit breaker 3 can be moved. The driving pin elements 40, as visible in Figures 7 and 8, run along the first slot portions 41 and go into contact with the cam band portions 66 of the fail safe actuators 23. As the driving pin elements 40 move inwards to the switching casing 4, the cam band portions 66 are pushed by the driving pin elements 40 upwards, thus disengaging the stopper elements 24 from the seat portions 58. The driving levers 26 are now unlocked and are enabled to the rotation. The driving pin elements 40 run along the third slot portions 43 and start to lower the driving levers 26 by overcoming the opposite action of the compression return springs 56 of the slider elements 52. Simultaneously, the rotation of the core plates 34 projects outward of the casing 4 the interlocking lever 59 which locks the front door 13. While the driving pin elements 40 run along the second slot portions 42 the shutter panel 5 has reached the lowered non-protective position 20, as shown in Figures 9 and 10.

When the driving pin elements 40 reach the left end of the driving levers 26, with reference to Figure 11, the movable electrical contacts 9 and 90 get in contact with the stationary electrical contacts 109 and 190 making the circuit breaker 3 operative.

In practice, it has been found that shutter device 1 according to the present disclosure offers a solution which is very reliable and safe; indeed the shutter device 1 is configured so that unexpected or manually opening thereof is prevented thus ensuring high levels of safety. The shutter device 1 is also configured to automatically screen electric contacts with high reliability and precision in the movement, so as to effectively protect operating or maintenance personnel who may have to enter the switchgear casing.

The shutter device 1 thus conceived, is susceptible of modifications and valuations, all of which are within the scope of the inventive concept as defined in particular by the appended claims.

## Claims

1. Shutter device (1) for a switchgear apparatus (2), comprising:
- a panel element (5) movable between a protective position (19), in which said panel element (5) prevents access to stationary electric contacts (109, 190) of said switchgear apparatus (2), and a non-protective position (20), in which said panel element (5) enables electric contacts (9, 90) of a circuit-breaker (3) of said switchgear apparatus (2) to couple with said stationary electric contacts (109, 190);
- driving lever means (15, 26) for driving said panel element (5) upon a movement of said circuit-breaker (3) from an extracted-non-operative position to an inserted-operative-position with respect to said switchgear apparatus (2), said driving lever means (15, 26) being movable by driving-pin-elements (40) fixed to said circuit breaker (3); and
- an interlocking assembly (10, 11, 12) configured for locking said driving lever means (15, 26) and blocking said panel element (5) in said protective position (19) so as to prevent manually or unexpectedly moving of said panel element (5) when said circuit-breaker (3) is in said extracted-non-operative position;
**characterized in that** said interlocking assembly (10, 11, 12) comprises:
- main-support means (27) fixable to a casing (4) of said switchgear apparatus (2);
- core-plate means (34) to which said driving lever means (26) are fixed, wherein said core-plate means (34) are provided with hinge-pin means (31) through which said driving lever means (26) are pivotally connected to said casing (4), said hinge-pin means (31) being pivotally coupled with said main-support-means (27) fixable to said casing (4), and wherein said core-plate means (34) extends radially with respect to and is rotatable around an axis (36) which is perpendicular to said driving lever means (26) and parallel to said panel element (5);
- fail-safe-actuator means (23) pivotally movable between a locking position in which it acts on said core-plate means (34) for locking said driving lever means (15, 26) thus blocking said panel element (5) in said protective position (19), and a releasing position in which said fail-safe-actuator means (23) disengage from said core-plate-means (34) thus enabling movement of said driving lever means (15, 26), said fail-safe-actuator means (23) being pivotally connected to said main-support-means (27) through pivot means (14).

2. Shutter device (1) according to one or more of the preceding claims, wherein stopper means (24) protrude from said fail-safe-actuator means (23), said stopper means (24) being configured for coupling, in said locking position, with seat means (58) provided on said core-plate means (34).

3. Shutter device (1) according to claim 2, wherein said fail-safe-actuator means (23) comprise cam means (66) suitable for receiving a pushing action from said driving-pin-elements (40) so as to disengage said stopper means (24) from said seat means (58), thus unlocking said core-plate means (34).

4. Shutter device (1) according to one or more of the preceding claims, wherein said fail-safe-actuator means (23) is elastically biased to said locking position by tension spring means (69).

5. Shutter device (1) according to one or more of the preceding claims, wherein on said fail-safe-actuator means (23) slot-means (67) are provided which cooperate with stationary stop pin means (68) for delimiting movement of said fail-safe-actuator means (23) between said locking position and said releasing position.

6. Shutter device (1) according to one or more of the preceding claims, wherein said interlocking assembly (10) comprises interlocking lever means (59) connected to said core-plate-means (34) and movable to an interlocking position for locking a front-door (13) of said switchgear apparatus (2) in a closed position thus preventing opening thereof when said circuit-breaker (3) is in said inserted-operative-position, wherein said interlocking lever means (59), in said interlocking position, protrude outward of said switchgear apparatus (2) for engaging with a blocking opening (72) provided on said front door (13).

7. Shutter device (1) according to one or more of the preceding claims, wherein said interlocking assembly (10, 12) further comprises padlock means (12) fixed to said driving lever means (26) and configured for further locking said driving lever means (26) in said protective position (19), and wherein on said padlock means (12) there is provided an opening suitable for being firmly coupled to a stationary zone of said switchgear apparatus (2).

8. Shutter device (1) according to one or more of the preceding claims, further comprising a pair of slider elements (52) pivotally connected to ends (30) of said driving lever means (26), each of said slider elements (52) being fixed to a respective side edge of said panel element (5) and being slidably coupled to a guide rod (53) which is fixed in a stationary position, so as to be able to slide along a straight path.

9. Shutter device (1) according to claim 8, wherein a guiding slot (55) is provided on each slider element (52), said guiding slot (55) being configured for interacting with a respective guide block (54) which is fixed to said guide rod (53) in stationary position for acting as a guide for said slider element 52, and wherein each slider element (52) comprises a return elastic element (56) housed within said guiding slot (55) and acting for pushing said slider element (52) towards said protective position (19).

10. Shutter device (1) according to any one of preceding claims, further comprising band screens (71) which are configured for being fixed to internal side zones of said switchgear apparatus (2) in order to cover any lateral gaps between said internal side zones and said circuit breaker (3).

11. Shutter device according to one or more of the preceding claims, wherein camprofiled-slot-means (39, 41, 42, 43) are provided in said driving lever means (26) which are suitable for interacting with said driving-pin-elements (40) of said circuit-breaker (3) so as to move said panel element (5) from said protective position (19) to said non protective position (20) and vice versa, and wherein said profiled-slot-means (39, 41, 42, 43) are shaped for abutting said driving-pin-elements (40) from opposite sides thus preventing disengagement of said driving levers (26) from said driving-pin-elements (40) during functioning of said shutter device (1).

12. Shutter device (1) according to one or more of the preceding claims, wherein said driving lever means comprises a pair of parallel driving levers (26) each formed as a one-piece element.

13. Switchgear apparatus wherein it comprises a shutter device (1) according to one or more of the preceding claims.

## Patentansprüche

1. Einsteckschutzvorrichtung (1) für eine Schaltgerätevorrichtung (2), aufweisend:
- ein Panelelement (5), das zwischen einer Schutzposition (19), in der das Panelelement (5) den Zugang zu stationären elektrischen Kontakten (109, 190) der Schaltgerätevorrichtung (2) verhindert, und einer Nichtschutzposition (20) beweglich ist, in der es das Panelelement (5) elektrischen Kontakten (9, 90) eines Leistungsschalters (3) der Schaltgerätevorrichtung (2) ermöglicht, sich mit den stationären elektrischen Kontakten (109, 190) zu verbinden;
- Ansteuerhebeleinrichtungen (15, 26) zum Ansteuern des Panelelements (5) bei einer Bewegung des Leistungsschalters (3) von einer ausgefahrenen Nichtbetriebsposition auf eine eingeführte Betriebsposition im Verhältnis zu der Schaltgerätevorrichtung (2), wobei die Ansteuerhebeleinrichtungen (15, 26) durch Ansteuerstiftelemente (40) bewegt werden können, die an dem Leistungsschalter (3) befestigt werden können; und
- eine Verzahnungsbaugruppe (10, 11, 12), die so konfiguriert ist, dass sie die Ansteuerhebeleinrichtungen (15, 26) verzahnen und das Panelelement (5) in der Schutzposition (19) verzahnen, so dass ein manuelles oder unerwartetes Bewegen des Panelelements (5) verhindert wird, wenn sich der Leistungsschalter (3) in der ausgefahrenen Nichtbetriebsposition befindet;
**dadurch gekennzeichnet, dass** die Verzahnungsbaugruppe (10, 11, 12) Folgendes aufweist:
- Haupttrageeinrichtungen (27), die an einem Gehäuse (4) der Schaltgerätevorrichtung (2) befestigt werden können;
- Kernplatteneinrichtungen (34), an denen die Ansteuerhebeleinrichtungen (26) befestigt sind, wobei die Kernplatteneinrichtungen (34) mit Scharnierbolzeneinrichtungen (31) versehen sind, durch die die Ansteuerhebeleinrichtungen (26) schwenkbar mit dem Gehäuse (4) verbunden sind, wobei die Scharnierbolzeneinrichtungen (31) schwenkbar mit den Haupttrageeinrichtungen (27) verbunden sind, die an dem Gehäuse (4) befestigt werden können, und wobei die Kernplatteneinrichtungen (34) radial in Bezug zu einer Achse (36) verlaufen und um diese drehbar sind, wobei die Achse zu den Ansteuerhebeleinrichtungen (26) rechtwinklig angeordnet sind und zu dem Panelelement (5) parallel angeordnet sind;
- störungssichere Aktoreinrichtungen (23), die schwenkbar zwischen einer Sperrposition, in der sie auf die Kernplatteneinrichtungen (34) wirken, um die Ansteuerhebeleinrichtungen (15, 26) zu sperren, wodurch das Panelelement (5) in der Schutzposition (19) blockiert wird, und einer Entriegelungsposition, in der sich die störungssicheren Aktoreinrichtungen (23) aus den Kernplatteneinrichtungen (34) ausklinken, beweglich sind, wodurch sie die Bewegung der Ansteuerhebeleinrichtungen (15, 26) ermöglichen, wobei die störungssicheren Aktoreinrichtungen (23) durch Schwenkeinrichtungen (14) schwenkbar mit den Haupttrageeinrichtungen (27) verbunden sind.

2. Einsteckschutzvorrichtung (1) nach einem oder mehreren der vorgenannten Ansprüche, wobei Stoppereinrichtungen (24) aus den störungssicheren Aktoreinrichtungen (23) herausragen, wobei die Stoppereinrichtungen (24) so konfiguriert sind, dass sie in der Sperrposition mit Sitzeinrichtungen (58) verbunden sind, die auf den Kernplatteneinrichtungen (34) vorgesehen sind.

3. Einsteckschutzvorrichtung (1) nach Anspruch 2, wobei die störungssichere Aktoreinrichtung (23) Nockeneinrichtungen (66) aufweist, die geeignet sind, einen Drückvorgang von den Ansteuerstiftelementen (40) zu empfangen, um die Stoppereinrichtungen (24) aus den Sitzeinrichtungen (58) auszuklinken, wodurch die Kernplatteneinrichtungen (34) entsperrt werden.

4. Einsteckschutzvorrichtung (1) nach einem oder mehreren der vorgenannten Ansprüche, wobei die störungssicheren Aktoreinrichtungen (23) durch Spannfedereinrichtungen (69) auf die Sperrposition elastisch vorgespannt sind.

5. Einsteckschutzvorrichtung (1) nach einem oder mehreren der vorgenannten Ansprüche, wobei sich auf den störungssicheren Aktoreinrichtungen (23) Schlitzeinrichtungen (67) befinden, die mit stationären Stoppstifteinrichtungen (68) zusammenwirken, um die Bewegung der störungssicheren Aktoreinrichtungen (23) zwischen der Sperrposition und der Entriegelungsposition zu begrenzen.

6. Einsteckschutzvorrichtung (1) nach einem oder mehreren der vorgenannten Ansprüche, wobei die Verzahnungsbaugruppe (10) Verzahnungshebeleinrichtungen (59) aufweist, die mit den Kernplatteneinrichtungen (34) verbunden sind und auf eine Verzahnungsposition bewegt werden können, um eine Vordertür (13) der Schaltgerätevorrichtung (2) in einer geschlossenen Position zu sperren, wodurch ein Öffnen derselben verhindert wird, wenn sich der Leistungsschalter (3) in der eingeführten Betriebsposition befindet, wobei die Verzahnungshebeleinrichtungen (59) in der Verzahnungsposition von der Schaltgerätevorrichtung (2) nach außen ragen, um mit einer Blockieröffnung (72), die sich an der Vordertür (13) befindet, ineinanderzugreifen.

7. Einsteckschutzvorrichtung (1) nach einem oder mehreren der vorgenannten Ansprüche, wobei die Verzahnungsbaugruppe (10, 12) ferner Vorhängeschlosseinrichtungen (12) aufweist, die an den Ansteuerhebeleinrichtungen (26) befestigt und so konfiguriert sind, dass sie die Ansteuerhebeleinrichtungen (26) weiter in der Schutzposition (19) sperren, und wobei auf den Vorhängeschlosseinrichtungen (12) eine Öffnung ausgebildet ist, die geeignet ist, fest mit einer stationären Zone der Schaltgerätevorrichtung (2) verbunden zu werden.

8. Einsteckschutzvorrichtung (1) nach einem oder mehreren der vorgenannten Ansprüche, ferner aufweisend ein Paar Gleitelemente (52), die schwenkbar mit Enden (30) der Ansteuerhebeleinrichtungen (26) verbunden sind, wobei jedes der Gleitelemente (52) an einer entsprechenden Seitenkante des Panelelements (5) befestigt ist und gleitbar mit einer Führungsstange (53) verbunden ist, die in einer stationären Position befestigt ist, so dass sie in der Lage ist, entlang eines geraden Pfads zu gleiten.

9. Einsteckschutzvorrichtung (1) nach Anspruch 8, wobei ein Führungsschlitz (55) auf jedem Gleitelement (52) vorgesehen ist, wobei der Führungsschlitz (55) so konfiguriert ist, dass er mit einem jeweiligen Führungsblock (54) zusammenwirkt, der an der Führungsstange (53) an einer stationären Position befestigt ist, um als eine Führung für das Gleitelement (52) zu dienen, und wobei jedes Gleitelement (52) ein elastisches Rückführelement (56) aufweist, das sich in dem Führungsschlitz (55) befindet und dazu dient, das Gleitelement (52) in Richtung der Schutzposition (19) zu drücken.

10. Einsteckschutzvorrichtung (1) nach einem der vorgenannten Ansprüche, ferner aufweisend Siebbänder (71), die so konfiguriert sind, dass sie an inneren Seitenzonen der Schaltgerätevorrichtung (2) befestigt sind, so dass sie laterale Lücken zwischen den inneren Seitenzonen und dem Leistungsschalter (3) abdecken.

11. Einsteckschutzvorrichtung nach einem oder mehreren der vorgenannten Ansprüche, wobei Nockenprofil-Schlitzeinrichtungen (39, 41, 42, 43) in den Ansteuerhebeleinrichtungen (26) vorgesehen sind, die geeignet sind, mit den Ansteuerstiftelementen (40) des Leistungsschalters (3) zusammenzuwirken, so dass das Panelelement (5) von der Schutzposition (19) auf die Nichtschutzposition (20) bewegt wird, und umgekehrt, und wobei die Nockenprofil-Schlitzeinrichtungen (39, 41, 42, 43) so geformt sind, dass sie von gegenüberliegenden Seiten aus an die Ansteuerstiftelemente (40) stoßen, wodurch sie das Ausklinken der Ansteuerhebel (26) aus den Ansteuerstiftelementen (40) während des Funktionierens der Einsteckschutzvorrichtung (1) verhindern.

12. Einsteckschutzvorrichtung (1) nach einem oder mehreren der vorgenannten Ansprüche, wobei die Ansteuerhebeleinrichtung ein Paar paralleler Ansteuerhebel (26) aufweist, die jeweils als ein einstückiges Element ausgebildet sind.

13. Schaltgerätevorrichtung, wobei sie eine Einsteckschutzvorrichtung (1) nach einem oder mehreren der vorgenannten Ansprüche aufweist.

## Revendications

1. Dispositif obturateur (1) pour un appareil de commutation (2), comprenant :
- un élément de panneau (5) pouvant se déplacer entre une position de protection (19), dans laquelle ledit élément de panneau (5) empêche l'accès aux contacts électriques fixes (109, 190) dudit appareil de commutation (2), et une position de non protection (20), dans laquelle ledit élément de panneau (5) permet aux contacts électriques (9, 90) d'un disjoncteur (3) dudit appareil de commutation (2) de se coupler avec lesdits contacts électriques fixes (109, 190) ;
- des moyens de leviers d'entraînement (15, 26) pour entraîner ledit élément de panneau (5) suite à un déplacement dudit disjoncteur (3) d'une position non fonctionnelle extraite à une position fonctionnelle insérée par rapport audit appareil de commutation (2), lesdits moyens de leviers d'entraînement (15, 26) étant mobiles par des éléments de broches d'entraînement (40) fixés audit disjoncteur (3) ; et
- un ensemble de verrouillage (10, 11, 12) configuré pour verrouiller lesdits moyens de leviers d'entraînement (15, 26) et pour bloquer ledit élément de panneau (5) dans ladite position de protection (19) de manière à empêcher un déplacement manuel ou inattendu dudit élément de panneau (5) lorsque ledit disjoncteur (3) est dans ladite position non fonctionnelle extraite ;
**caractérisé en ce que** ledit ensemble de verrouillage (10, 11, 12) comprend :
- un moyen de support principal (27) pouvant être fixé à un boîtier (4) dudit appareil de commutation (2) ;
- un moyen de plaque centrale (34) auquel lesdits moyens de leviers d'entraînement (26) sont fixés, où ledit moyen de plaque centrale (34) est muni de moyens de broches d'articulation (31) à travers lesquels lesdits moyens de leviers d'entraînement (26) sont reliés en pivotement audit boîtier (4), lesdits moyens de broches d'articulation (31) étant couplés en pivotement audit moyen de support principal (27) pouvant être fixé audit boîtier (4), et où ledit moyen de plaque centrale (34) s'étend radialement par rapport à un axe (36) et peut tourner autour de celui-ci, qui est perpendiculaire audit moyen de levier d'entraînement (26) et parallèle audit élément de panneau (5) ;
- un moyen d'actionneur à sécurité intégrée (23) pouvant se déplacer en pivotement entre une position de verrouillage dans laquelle il agit sur ledit moyen de plaque centrale (34) pour verrouiller lesdits moyens de leviers d'entraînement (15, 26) bloquant ainsi ledit élément de panneau (5) dans ladite position de protection (19), et une position de libération dans laquelle ledit moyen d'actionneur à sécurité intégrée (23) se désengage dudit moyen de plaque centrale (34) permettant ainsi un déplacement desdits moyens de leviers d'entraînement (15, 26), ledit moyen d'actionneur à sécurité intégrée (23) étant relié en pivotement audit moyen de support principal (27) par des moyens de pivotement (14).

2. Dispositif obturateur (1) selon l'une ou plusieurs des revendications précédentes, dans lequel des moyens d'arrêt (24) font saillie à partir dudit moyen d'actionneur à sécurité intégrée (23), lesdits moyens d'arrêt (24) étant configurés pour se coupler, dans ladite position de verrouillage, avec des moyens de sièges (58) prévus sur ledit moyen de plaque centrale (34).

3. Dispositif obturateur (1) selon la revendication 2, dans lequel ledit moyen d'actionneur à sécurité intégrée (23) comprend des moyens de cames (66) aptes à recevoir une action de poussée à partir desdits éléments de broches d'entraînement (40) de manière à désengager lesdits moyens d'arrêt (24) desdits moyens de sièges (58), déverrouillant ainsi ledit moyen de plaque centrale (34).

4. Dispositif obturateur (1) selon l'une ou plusieurs des revendications précédentes, dans lequel ledit moyen d'actionneur à sécurité intégrée (23) est sollicité de manière élastique vers ladite position de verrouillage par un moyen de ressort de traction (69).

5. Dispositif obturateur (1) selon l'une ou plusieurs des revendications précédentes, dans lequel, sur ledit moyen d'actionneur à sécurité intégrée (23) des moyens de fentes (67), qui coopèrent avec des moyens de broches d'arrêt fixes (68) pour délimiter un déplacement dudit moyen d'actionneur à sécurité intégrée (23) entre ladite position de verrouillage et ladite position de libération, sont prévus.

6. Dispositif obturateur (1) selon l'une ou plusieurs des revendications précédentes, dans lequel ledit ensemble de verrouillage (10) comprend des moyens de leviers de verrouillage (59) reliés audit moyen de plaque centrale (34) et pouvant se déplacer vers une position de verrouillage pour verrouiller une porte avant (13) dudit appareil de commutation (2) dans une position fermée empêchant ainsi l'ouverture de celle-ci lorsque ledit disjoncteur (3) est dans ladite position fonctionnelle insérée, où lesdits moyens de leviers de verrouillage (59), dans ladite position de verrouillage, font saillie vers l'extérieur dudit appareil de commutation (2) pour s'engager avec une ouverture de blocage (72) prévue sur ladite porte avant (13).

7. Dispositif obturateur (1) selon l'une ou plusieurs des revendications précédentes, dans lequel ledit ensemble de verrouillage (10, 12) comprend en outre un moyen de cadenas (12) fixé audit moyen de levier d'entraînement (26) et configuré pour verrouiller en outre ledit moyen de levier d'entraînement (26) dans ladite position de protection (19), et dans lequel, sur ledit moyen de cadenas (12) une ouverture adaptée pour être fermement couplée à une zone fixe dudit appareil de commutation (2), est prévue.

8. Dispositif obturateur (1) selon l'une ou plusieurs des revendications précédentes, comprenant en outre une paire d'éléments coulissants (52) reliés en pivotement à des extrémités (30) dudit moyen de levier d'entraînement (26), chacun desdits éléments coulissants (52) étant fixé à un bord latéral respectif dudit élément de panneau (5) et étant couplé en coulissement à une tige de guidage (53) qui est fixée dans une position fixe, de manière à pouvoir coulisser le long d'une trajectoire rectiligne.

9. Dispositif obturateur (1) selon la revendication 8, dans lequel une fente de guidage (55) est prévue sur chaque élément coulissant (52), ladite fente de guidage (55) étant configurée pour interagir avec un bloc de guidage respectif (54) qui est fixé à ladite tige de guidage (53) dans une position fixe pour agir en tant que guide pour ledit élément coulissant (52), et dans lequel chaque élément coulissant (52) comprend un élément élastique de rappel (56) logé à l'intérieur de ladite fente de guidage (55) et agissant pour pousser ledit élément coulissant (52) vers ladite position de protection (19).

10. Dispositif obturateur (1) selon l'une quelconque des revendications précédentes, comprenant en outre des écrans en bande (71) qui sont configurés pour être fixés à des zones latérales internes dudit appareil de commutation (2) afin de couvrir tout espace latéral entre lesdites zones latérales internes et ledit disjoncteur (3).

11. Dispositif obturateur selon l'une ou plusieurs des revendications précédentes, dans lequel des moyens de fentes profilées en cames (39, 41, 42, 43) sont prévus dans ledit moyen de levier d'entraînement (26) qui sont aptes à interagir avec lesdits éléments de broches d'entraînement (40) dudit disjoncteur (3) de manière à déplacer ledit élément de panneau (5) de ladite position de protection (19) vers ladite position de non protection (20) et vice versa, et dans lequel lesdits moyens de fentes profilées en cames (39, 41, 42, 43) sont conformés pour venir en butée contre lesdits éléments de broches d'entraînement (40) à partir de côtés opposés empêchant ainsi le désengagement desdits leviers d'entraînement (26) desdits éléments de broches d'entraînement (40) au cours du fonctionnement dudit dispositif obturateur (1).

12. Dispositif obturateur (1) selon l'une ou plusieurs des revendications précédentes, dans lequel ledit moyen de levier d'entraînement comprend une paire de leviers d'entraînement (26) parallèles formés chacun en tant qu'élément monobloc.

13. Appareil de commutation, dans lequel il comprend un dispositif obturateur (1) selon l'une ou plusieurs des revendications précédentes.
